(19) Europäisches Patentamt
European Patent Office
Office européen des brevets

(11) **EP 2 816 807 A1**

(12) **EUROPEAN PATENT APPLICATION**

(43) Date of publication:
**24.12.2014 Bulletin 2014/52**

(51) Int Cl.:
***H04N 19/503*** *(2014.01)*

(21) Application number: **13172237.3**

(22) Date of filing: **17.06.2013**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Gurulogic Microsystems OY**
**20100 Turku (FI)**

(72) Inventors:
• **Kärkkäinen, Tuomas**
**20100 Turku (FI)**

• **Kalevo, Ossi**
**20100 Turku (FI)**

(74) Representative: **Kolster Oy Ab**
**Iso Roobertinkatu 23**
**PO Box 148**
**00121 Helsinki (FI)**

Remarks:
Amended claims in accordance with Rule 137(2)
EPC.

(54) **Processing and reproduction of frames**

(57)     A processor (12) is configured to receive input data (10), divide an individual frame (1) into blocks, compare the blocks with corresponding blocks of a first prediction frame for (2) and identify changed blocks (3). In order to obtain an efficient solution for processing and reproducing frames, the processor is configured to include in generated intermediate data (7) the blocks identified as changed blocks (3)" and generate a change indicator (8) indicating the positions in the individual frame (1) of the identified changed blocks (3) and identified unchanged blocks (4).

FIG. 5

EP 2 816 807 A1

**Description**

**BACKGROUND**

**FIELD**

This application relates to a solution for optimizing storage and transfer of data by processing the data and by subsequently reproducing the processed data. In the following the examples will be presented mainly by referring to video data and audio data. It should be observed that these are only examples and that also other kind of data can be utilized, such as images, graphics data, text data, ECG data, seismic data, ASCII data, Unicode data, binary data.

**DESCRIPTION OF PRIOR ART**

Previously there is known from WO 2006/016007 A1 a solution where individual frames of input data are divided into blocks, and each such block is compared to a corresponding block of a prediction frame in order to identify changed blocks and unchanged blocks. The blocks identified as unchanged are modified by setting the colour values of the pixels of these blocks to a predetermined value, and a signal is generated to contain all the blocks including the changed blocks and the unchanged blocks. The colour value of the unchanged movement blocks has been selected such that a codec encoding the generated signal works as efficiently as possible.

Once the original frames need to be regenerated, the encoded signal is decoded, and a prediction frame is modified for each subsequent frame such that only the changed blocks of the decoded signal are used for modifying the prediction frame, while the unchanged blocks of the decoded signal whose pixel values correspond to the predetermined colour value are not used for modifying the prediction frame.

The above described prior art solution works efficiently for video images. However, it would be desirable to still reduce the amount of data that needs to be transmitted or stored between the processing of the original frames and the regeneration of the original frames.

**SUMMARY**

An object is to solve the above mentioned drawback and to provide a solution which can be utilized also for other purposes than for video images, and which makes it possible to transfer or store data more efficiently than previously. This and other objects are obtained with the solution according to independent claims 1, 10, 13, 14, 15 and 16.

The use of a change indicator that indicates the positions in the individual frame of the changed blocks and unchanged blocks makes it possible to drop blocks identified as unchanged. Therefore the data which is stored or transmitted for subsequent use by a reproducer can be minimized. The reproducer is capable of generating output data based on the intermediate data and the change indicator such that the output data corresponds to the original input data with a sufficient accuracy.

**BRIEF DESCRIPTION OF DRAWINGS**

In the following examples will be presented with reference to the attached drawings, in which

Figures 1 to 3 illustrate processing of input data,

Figure 4 illustrates reproduction,

Figure 5 illustrates a system with a processor and a reproducer,

Figure 6 illustrates a second embodiment for processing input data,

Figure 7 illustrates a third embodiment for processing input data,

Figure 8 illustrates a second embodiment of a system with a processor and a reproducer, and

Figure 9 illustrates a third embodiment of a system with a processor and a reproducer.

**DESCRIPTION OF AT LEAST ONE EMBODIMENT**

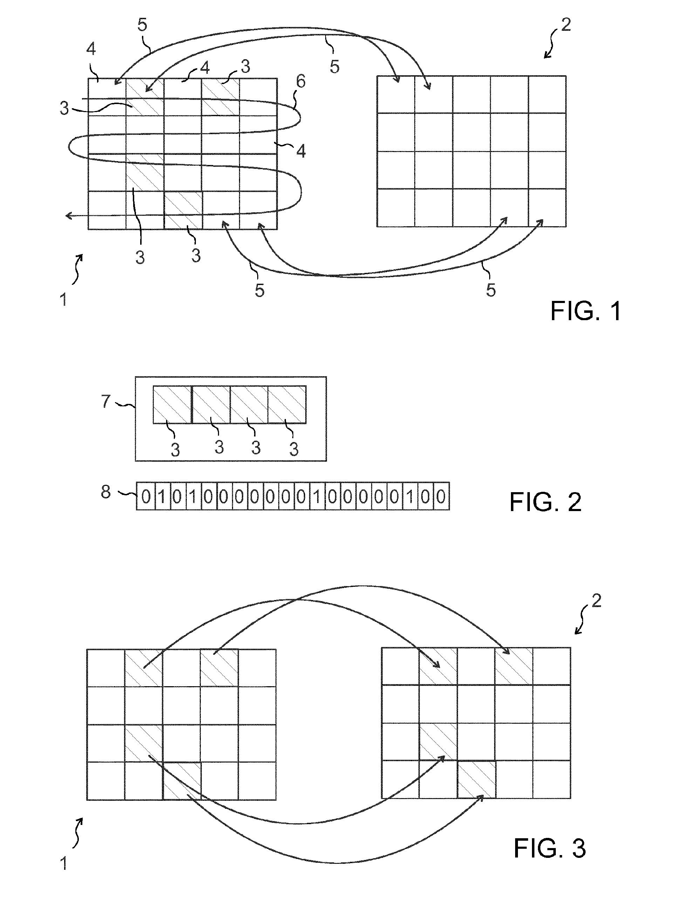

Figures 1 to 3 illustrate processing of input data. Figure 1 illustrates an individual frame 1 included in the received input data. The input data may originally be included in packets, for instance. The individual frame 1 is divided into data blocks of a suitable size. The block may include data in one dimension, two dimensions or more than two dimensions. In case of an image of a video, each block may include 8x8 pixels, for instance. In the example of Figure 1 the individual frame 1 has been divided into 20 blocks. The input data may include video data, audio data, images, graphics data, text data, ECG data, seismic data, ASCII data, Unicode data, binary data or financial data, for instance.

The blocks of the individual frame 1 which is being processed are compared to corresponding blocks of a first prediction frame 2, as illustrated by arrows 5. In praxis, the first prediction frame 2 represents the content of the previously processed individual frame. In case of a video, the prediction frame 2 may represent the previous image in the video (or an entirely black or other predefined or delivered color valued frame) when a first individual frame or alternatively an Intra frame or key frame of input data is being processed and the comparison will indicate what parts (blocks) of the individual frame 1 have changed since the previous image in the video, for instance. Previously there are known many alternative ways of carrying out such comparison. The comparison may be based on colour values, luminance, or intensity, for instance. It is also previously known to utilize thresholds in determining whether or not a block is identified as changed, such that a change in one single pixel is not necessarily determined to be an indication of a changed frame, but instead a sufficient number of pixels must have changed, for instance, in order to determine that the threshold is passed and the block is identified as changed. Such a threshold may be utilized in some implementations, in order to ensure that only detected differences which are significant enough trigger detection of a changed block. It is also possible to use RD-optimization (Rate-Distortion Optimization) to make the decision as to whether the block is unchanged or changed. The calculated RD-value of the unchanged block is then compared with the RD-value calculated by using some coding method for coding the block. The RD-value depends on the target quality of the reconstruction and it can be calculated from equation:

$$\text{RD-value= reconstruction error + lambda * bits,}$$

where lambda is quality target multiplier. Small lambda value (e.g. 0 to 5) means that the quality target is high and big lambda value (e.g. 100 to 1000) means that the quality target is low. Reconstruction error can be e.g. sum of absolute differences (SAD), sum of square differences (SSD), mean absolute error (MAE), mean square error (MSE), maximum absolute difference (MaxAD), but not limited thereto.

The comparison is carried out by comparing each block of the individual frame 1 with the corresponding block in the prediction frame 2. The blocks of the individual frame 1 may be processed in the order illustrated by arrow 6, for instance. During the processing intermediate data 7 and a change indicator 8 illustrated in Figure 2 are generated.

In the illustrated example it is by way of example assumed that the block in the upper left corner of the individual frame 1 does correspond to the block in the upper left corner of the prediction frame 2, therefore this block is identified as unchanged. This unchanged block 4 is dropped by not including it into the intermediate data 7. The change indicator 8 is, however, generated to indicate the first processed block of frame 1 as unchanged with a "0" (most to the left in Figure 2).

The second block from left in the upper row of the frame 1, however, is assumed to not correspond to the second block from left in the upper row of the prediction frame 2. Therefore this block is identified as a changed block. The changed block 3 is included in the intermediate data 7 and the change indicator 8 is generated to indicate the second processed block of frame 1 as changed with a "1 ".

The processing continues for all blocks of frame 1 as explained above, resulting in the intermediate data 7 and change indicator 8 illustrated in Figure 2 for the first processed individual frame 1 illustrated in Figure 1. As can be seen in Figure 2, the intermediate data 7 includes for the first processed individual frame 1 only the image data of four changed blocks 3, and the change indicator 8 for this processed frame 1 indicates in the order that the frame has been processed with a "1" locations of changed blocks 3 and with a "0" locations of (dropped) unchanged blocks 4. The intermediate data 7 and the change indicator 8 for the first block is stored or forwarded for further processing.

Once the first block of the input data has been processed, the prediction frame 2 is modified, if necessary. The modification may be carried out such that the pixels of the blocks of the first processed individual frame 1 that have been identified as changed blocks 3 are copied into the corresponding locations of the first prediction frame 2, as illustrated in Figure 3.

After this a new individual frame is received from the input data, and this new individual frame is processed in the same way as explained above for the first individual frame, however, by carrying out the comparison to the modified first prediction frame. This process results in additional intermediate data and an additional change indicator, which again are stored or forwarded for further transmission.

After processing of the second individual frame, the first prediction frame is again modified (if necessary), and the process continues until all individual frames of the received input data have been processed in the same way. Sometimes the video or scene will change dramatically between two video frames, or an intra frame or a key-frame is required for the frame. For that kind of purposes it is possible to deliver separate global change information (e.g. global motion information, scale, multiplier, or addition/subtraction value for reference frame) or indication that the reference frame is initialized (and optional initialization values) from the processor to the reproduction device, which uses it as the second prediction frame when intermediate data is processed by the reproducer. In this way the processor and the reproducer can operate similarly and guarantee successful operation (similar frames are used in prediction and reconstruction).

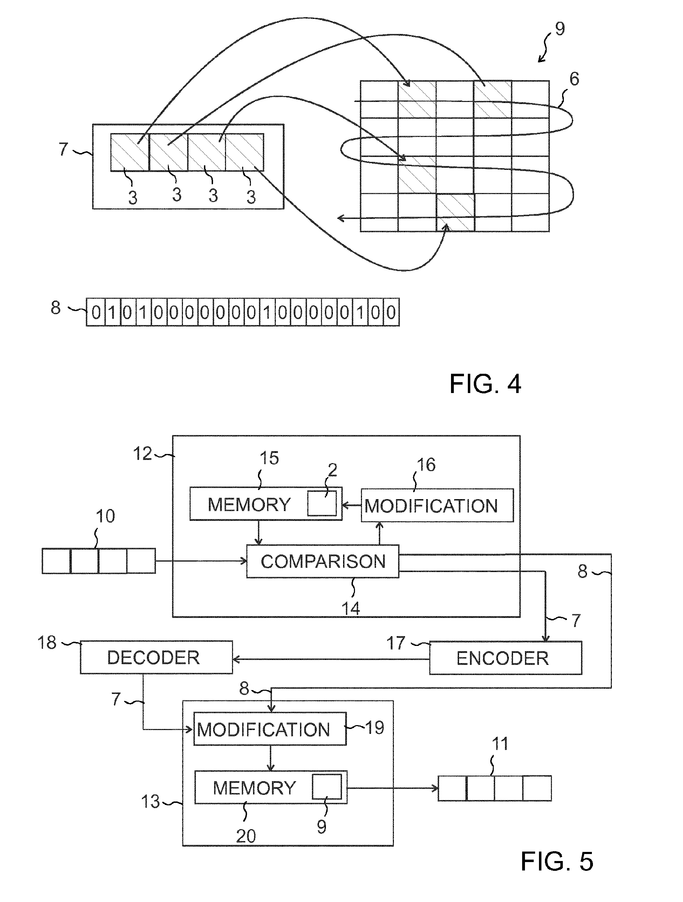

Figure 4 illustrates reproduction based on the intermediate data and the change indicator produced in the processing of Figures 1 to 3.

In Figure 4 a second prediction frame 9 is modified by utilizing the intermediate data 7 containing the changed blocks 3 and the change indicator 8 produced during processing of the first individual frame 1 of the input data according to Figures 1 to 3. The blocks of the second prediction frame 9 are processed in the same order as in Figure 1, as illustrated by arrow 6.

The changed blocks 3 included in the received intermediate data 7 are obtained one by one, and the received change indicator is used to determine at which positions the changed blocks 3 should be used for modifying the data of the second prediction frame 9. For instance, the first "0" in the change indicator indicates that the upper left block of the second prediction frame 9 should not be modified, while the second "1" indicates that the second block from the left upper corner of the prediction frame 9 should be modified by using the content of the first changed block 3 of the intermediate data.

Once the process has been repeated for the entire second prediction frame 9, output data is generated to include the content of the modified second prediction frame 9. At that stage processing of the intermediate data and the position indicator produced by processing of the second individual frame in Figures 1 to 3 is started. At this stage the second prediction frame 9 modified as explained above is used for further modification in the same way as explained above. Finally output data is again generated to include the content of the newly modified second prediction frame 9.

The result is that during reproduction output data is generated that corresponds to the original input data with a sufficient accuracy.

Figure 5 illustrates a system with a processor and a reproducer. The processor and the reproducer may be configured to operate as has been explained in connection with Figures 1 to 4.

Figure 5 illustrates a processor 12 receiving input data 10 for processing, and a reproducer 13 which receives data from the processor 12, and which subsequently is capable of producing an output data 11 that with a sufficient accuracy corresponds to the input data 10.

The processor 12 and the reproducer 13 may be implemented with circuitry, a combination of circuitry and software or as computer programs which are configured to control a programmable computer to carry out the tasks of the previous and the following explanation. In case of computer programs, each computer program may be contained on a non-transitory computer storage medium which can be read by a computer.

The processor 12 comprises a comparator 14, which receives the input data 10, divides one frame at a time into data blocks and carries out the comparison between the blocks of the processed individual frame 1 and the first prediction frame 2 (maintained in the memory 15), as explained in connection with Figure 1. Based on the comparison the blocks detected as changed blocks 3 are included in the generated intermediate data 7 and the positions of the changed blocks 3 and the unchanged blocks are included in the change indicator 8. After processing of each individual frame, the first prediction frame 2 maintained in memory 15 is modified (if necessary) by a modification block 16, if necessary, as explained in connection with Figure 3.

The intermediate data 7 is forwarded to an encoder 17, directly or after storage in a memory (not illustrated). The encoder may be standard previously known image/video encoder, such as a DiVX, MPEG4, JPEG or JPE2000 encoder, for instance. Such an encoder 17 is capable of reducing the data size of the intermediate data considerably, as previously known. However, the fact that the unchanged blocks have already previously been dropped by the processor, makes the encoding much more efficient as it is not necessary for the encoder 17 to process all the blocks of the original input data 10, but only the changed blocks 3. Additionally, the amount of data which is transmitted (possibly stored in a memory before being transmitted) for subsequent use by a reproducer can be minimized.

In order to reproduce the original data, such as a video, the encoded intermediate data is forwarded to a decoder 18, directly or after storage in a memory (not illustrated). Also the decoder 18 may be a standard previously known image/video decoder, for instance. The decoder restores the intermediate data 7 which is forwarded to the reproducer 13, directly or after storage in a memory (not illustrated).

A modification block 19 utilizes the intermediate data 7 and the change indicator 8 to modify the second prediction frame 9 maintained in a memory 20, as explained in connection with Figure 4. Output data 11 is produced by the reproducer by including the content of the second intermediate frame 9 into the output data 11. Consequently the output data 11 corresponds with sufficient accuracy to the input data 10, and the original video (for instance) may be displayed on a display, for instance.

In Figure 5 it is by way of example assumed that the encoder 17 and the decoder 18 are standard previously known encoders and decoders. Therefore, as such encoders and decoders are not capable of handling the change indicator 8, the change indicator is in the example of Figure 5 forwarded directly from the processor 12 to the reproducer 13, directly or after storage in a memory (not illustrated). However, in case a modified non-standard encoder or decoder is utilized such that the encoder, decoder or both are capable of receiving and handling the change indicator 8, then also the change indicator may be forwarded via the encoder and/or decoder. When the encoder and the decoder are capable of handling change indicators, then it is also possible that the size of the delivered frame to the encoder is similar than the size of the input frame, but in the encoder and in the decoder the data values of the blocks that are unchanged by change indicator are just ignored in the processing (encoding and decoding) and the data values of those blocks will be similar than the data values of the prediction frame. This enables minimizing the amount of processing, as well as the data delivery, in the encoder and in the decoder but the changed blocks can still be coded e.g. with motion estimation methods. This is possible due to the block positions being preserved and the prediction frame containing all the needed data values. Naturally, it is also possible that the encoder 17 is integrated into the processor 12, and/or that the decoder 18 is integrated into the reproducer 13.

Above in connection with Figures 1 to 5 the processing and reproduction has been explained mainly by referring to a video and images of a video. However, the input data may in praxis be some other type of data than video. One alternative is that the input data is audio data, in which case the frames contain samples of audio signals, for instance. One frame may contain 200 samples, for instance. In that case the comparison may be carried out by comparing the frequency and/or the intensity of the samples, for instance, in order to identify the changed blocks and the unchanged blocks of the processed individual frame. In that case also an encoder and decoder suitable for handling audio signals may be utilized.

One alternative for still image encoding is that e.g. each row (or column) of data blocks is processed as one frame. This enables that still image contains also multiple frames and this kind of method enables prediction to utilize spatial information instead of the temporal information that is used in video frames, where the individual images are frames.

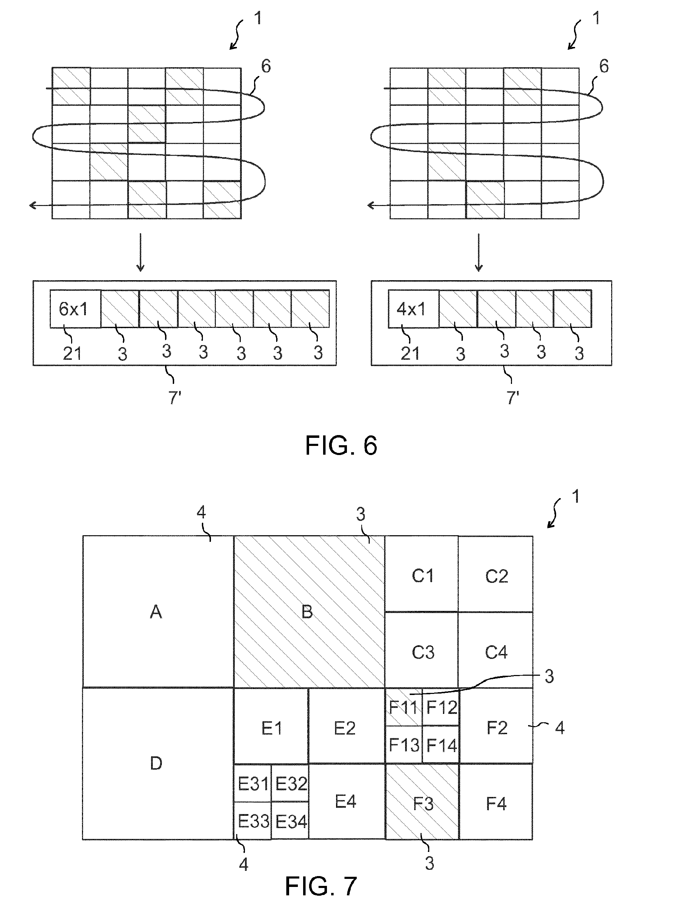

Figure 6 illustrates a second embodiment for processing input data. The second embodiment corresponds to a great extent to the embodiment explained in connection with Figures 1 to 5. Therefore the embodiment of Figure 6 will be explained mainly by pointing out the differences between these embodiments.

Some standard image/video encoders require information about the frame size of the image that needs to be encoded. Therefore in the embodiment of Figure 6 the intermediate data 7' produced during processing of the first individual frame 1 (to the right in Figure 6) and the following individual frame 1 (to the left in Figure 6) includes a header 21 indicating the frame size. In the illustrated example the headers 21 are shown to indicate the frame size in the form 4x1 and 6x1, where the numbers refer to the number of blocks (such as blocks with 8x8 pixels) included in the frame in the horizontal and vertical direction. This is, however, only an example. In practice it is not important what size or form the frame has (2x2 or 1 x4 instead of 4x1; 1 x6 or 3x2 or 2x3 instead of 6x1) as long as the number of blocks that needs to be encoded for each frame is clear for the encoder. If the block size is not predetermined (such as 8X8 pixels), the frame size indicator may include information about the size of the blocks in addition to the number of blocks in the horizontal and vertical direction. Alternatively, the frame size may be indicated directly and only as the number of pixels in the horizontal and vertical direction of the entire frame, such as M x N pixels, for instance, in which case the number of blocks must not necessarily be indicated at all.

Figure 7 illustrates a second embodiment for processing input data. The second embodiment corresponds to a great extend to the embodiments explained in connection with Figures 1 to 6. Therefore the embodiment of Figure 7 will mainly be explained by pointing out the differences between these embodiments.

In Figure 7 the individual frame 1 included in the input data is divided into blocks of different size. Therefore, in order to be able to correctly reproduce, the change indicator additionally indicates the size of the blocks of the processed individual frame.

In the illustrated example, the individual frame 1 is at a first level divided into six blocks A, B, C, D, E, F with the same predefined size. However, each one of the six blocks may be split into four sub blocks, and each sub block may again be split into four sub blocks.

In order to correctly carry out the comparison of the individual frame 1 divided into blocks as illustrated in Figure 7, the first prediction frame is divided into blocks in the same way. Thereby blocks of equal size may be compared to each other.

The size indicator may include for each block a first indicator which is "0" if the block is not split into four sub blocks, and which is "1" if the block is split. In case the block is split into four sub blocks, four indicators follow that indicate whether or not the sub blocks are split in to four new sub blocks. In case of the illustrated example, the size indicator takes the form: 0 0 1 0000 0 1 0010 0000 1 1000 0000, where first two "0" illustrate that the initial blocks A and B are not split, third block C is split "1" but the four sub blocks are not split "0000", fourth block D is not split "0", fifth block E is split "1" in to four sub blocks, first two sub blocks (E1, E2) are not split but sub block E3 is split into four sub blocks and sub block E4 is not split "0010", etc.

When the size indicator as explained above is included in the change indicator 8 and forwarded from the processor 12 to the reproducer 13 together with the intermediate data 7 containing the changed blocks (irrespective of their size), the reproducer 13 is capable of reproducing a frame corresponding with sufficient accuracy to the individual frame 1 illustrated in Figure 7 such that also the size of the blocks can be taken into account.

The embodiment of Figure 7 may be used in combination with the embodiment of the previous embodiments, such that some of the frames of the input data are divided into blocks having a fixed standard size, and some of the blocks are divided into blocks of different size. In that case the size indicator needs to be included into the change indicator 8 only for the blocks which are not divided into the fixed standard size.

Naturally, the way of dividing the frames into blocks of different size explained in connection with Figure 7 is only an example, and in practice the frames may be divided into blocks of different size in some other way, in which case the size indicator which is included in the change indicator 8 indicates the block size in a different way. One alternative is to utilize initial blocks of smaller size, which are combined into larger blocks when appropriate.

As an alternative to the previous examples, the processor and the reproducer can be used recursively. This means that the same frame of the input data can be processed with the processor multiple times and every time the frame is processed the quality of reconstructed image is increased. With recursive processing it is possible to deliver every round all the change indication values or it is possible that in the next round only those values are delivered that were changed in the previous indication values. Such a solution may be implemented such that in a first round a frame of the input data is processed with the processor, intermediate data and the change indicator is forwarded to the reproducer and the first prediction frame is updated. In a second round the same frame of the input data is again processed, but now by using the updated first prediction frame. Again intermediate data and the change indicator is forwarded to the reproducer and the first prediction frame is updated. After the second round the same frame of the input data may be processed again and even more than once, each time by utilizing the latest updated first prediction frame. Therefore the same frame of the input data is recursively processed in small steps until the first prediction frame is close enough to the processed frame of the input data. It is possible that in all rounds the changed/unchanged information is delivered for all blocks or then it is possible that the information is delivered in next round only for those blocks that were changed in the previous round.

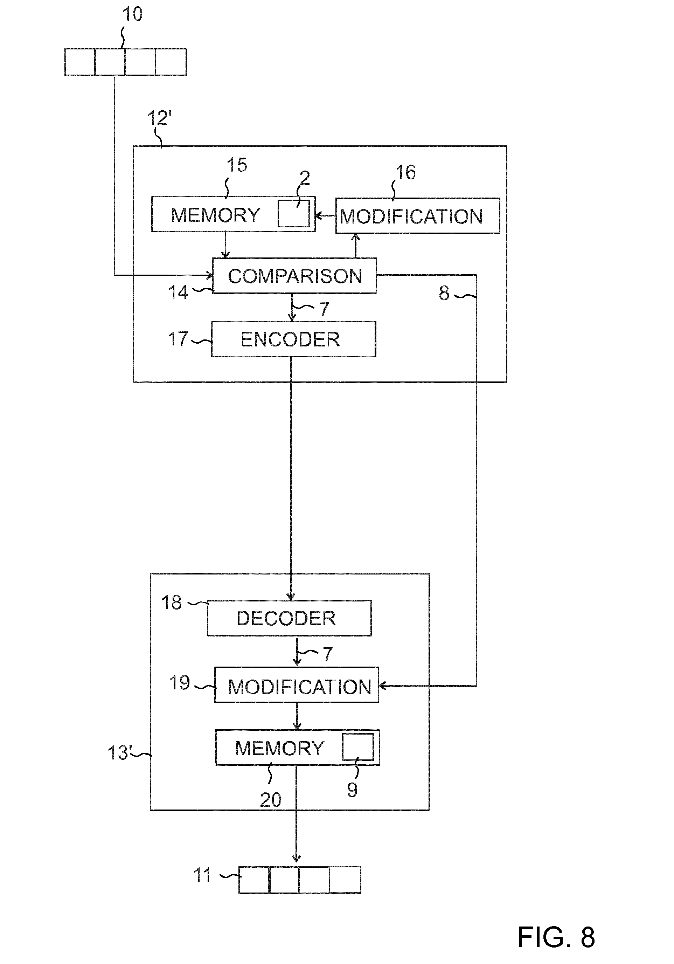

Figure 8 illustrates a second embodiment of a system with a processor and a reproducer. The embodiment of Figure 8 is very similar as the embodiment explained in connection with Figure 5. Therefore the embodiment of Figure 8 will be explained mainly by pointing out the differences between these embodiments.

In Figure 8 a processor 12' with an integrated encoder 17 is utilized. Similarly, the reproducer 13' comprises an integrated decoder. Therefore only two components are needed for processing the input data 10 and for reproducing the output data 11.

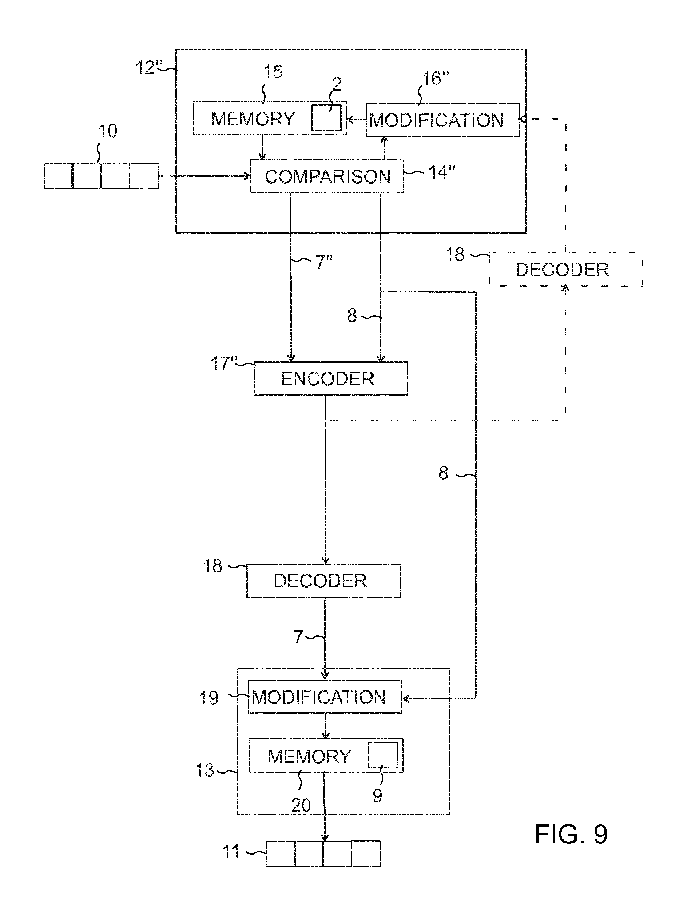

Figure 9 illustrates a third embodiment of a system with a processor and a reproducer. The embodiment of Figure 9 is very similar to the embodiment of Figure 5. Therefore the embodiment of Figure 9 will mainly be explained by pointing out the differences between the embodiment of Figure 5 and the embodiment of Figure 9.

In Figure 5 it is by way of example assumed that the encoder 17 is a standard previously known encoder. However, in Figure 9 the encoder 17" is not a standard encoder, but instead it is capable of receiving and handling the change indicator 8. Consequently, it is not necessary to drop the unchanged blocks 4 at the processor 12". Instead the intermediate data 7" may include both the changed blocks 3 and the unchanged blocks 4. Based on the change indicator 8 from the comparison block 14" of the processor 12" the encoder 17" is capable of selecting the correct blocks, in other words the changed blocks 3 only, for encoding. The encoding is carried out similarly as in the previous embodiments and the decoder 18 and the reproducer 13 therefore corresponds to the decoder and reproducer of the previous embodiment. Consequently dropping of unchanged blocks 4 is carried out by the encoder 17". The amount of data transmitted between the encoder 17" and the decoder 18 (directly or after storage in a memory) can therefore be minimized.

Figure 9 also illustrates with dashed lines that the first prediction frame 2 is modified by taking into account encoding and decoding operations carried out for the changed movement blocks 3 contained in the intermediate data 7". In this way it can be ensured that possible modifications occurring due to the encoding and decoding operations can be accurately taken into account for the first prediction frame 2.

In Figure 9 it is by way of example assumed that the encoder 17" is not included in the processor 12" (though it may be). The intermediate data 7" and the change indicator 8 is forwarded from the processor 12" to the encoder 17" directly or after storage in a memory (not illustrated). The signal obtained from the encoder is returned via an additional decoder 18 (may be integrated into the processor 12" or a separate element) to the modification block 16", which utilizes it when modifying the first prediction frame 2 that is maintained in the memory 15.

An advantage obtained by taking into account the encoding and decoding is that the first prediction frame 2 always corresponds as much as possible to the second prediction frame 9, which results in better quality. Additionally, in case the encoder 17" is integrated into the processor the encoder and the processor may utilize the same single first prediction frame in their operations.

It is to be understood that the above description and the accompanying figures are only intended to be examples. It will be obvious to a person skilled in the art that the variations and modifications can be made without departing from the scope of the claims.

**Claims**

1.  A processor (12, 12', 12") configured to:

    receive input data (10),
    divide an individual frame (1) included in the input data into blocks,
    compare the blocks of the individual frame (1) with corresponding blocks of a first prediction frame for (2) detecting differences in the compared blocks,
    identify as changed blocks (3) the blocks of the individual frame (1) for which differences have been detected,
    identify as unchanged blocks (4) the blocks of the individual frame (1) for which no differences have been detected, and
    generate intermediate data (7, 7', 7"), **characterized in that** for each processed individual frame (1) the processor is configured to
    include in the generated intermediate data (7, 7', 7") the blocks identified as changed blocks (3), and
    generate a change indicator (8) indicating the positions in the individual frame (1) of the identified changed blocks (3) and identified unchanged blocks (4).

2.  The processor according to claim 1, **characterized in that** for each processed individual frame (1) the processor is configured to drop the blocks identified as unchanged blocks (4) by not including them into the generated intermediate data (7, 7').

3.  The processor according to claim 1, **characterized in that** for each processed individual frame (1) the processor is configured to include in the generated intermediate data (7") also the blocks identified as unchanged blocks (4).

4.  The processor according to one of claims 1 - 3, **characterized in that** for each processed individual frame (1) the processor (12, 12', 12") is configured to modify the first prediction frame (2) such that when processing of a subsequent individual frame is carried out at least the blocks identified as changed blocks (3) in the previous processed individual frame (1) have been modified in the first prediction frame (2) to correspond to the corresponding blocks of the previously processed individual frame.

5.  The processor according to one of claims 1 - 3, **characterized in that** for each processed individual frame (1) the processor (12") is configured to modify the first prediction frame (2) by utilizing a signal indicating the content of the changed blocks (3) of the intermediate data (7") after an encoding and decoding operation.

6.  The processor according to one of claims 1 to 5, **characterized in that** the processor (12, 12', 12") is configured to generate and include in the intermediate data (7') a frame size indicator (21) for the processed individual frame (1) size of the changed blocks (3) included in the intermediate data (7').

7.  The processor according to one of claims 1 to 6, **characterized in that** the processor (12, 12', 12") is configured to divide the individual frame (1) included in the input data (10) into blocks of different size, and
    generate the change indicator (8) to additionally indicate the size of the blocks of the processed individual frame (1).

8.  The processor according to one of claims 1 to 7, **characterized in that** the processor is configured to compare the detected differences to a threshold, and to identify as changed blocks (3) the blocks of the individual frame (1) whose detected differences exceeds the threshold, and to identify as unchanged blocks (4) the blocks of the individual frame (1) whose detected differences do not exceed the threshold.

9.  The processor according to one of claims 1 to 8, **characterized in that** the processor is configured to forward to a reproducer a global change information indication for use as a second prediction frame when intermediate data is processed by the reproducer.

10. A reproducer (13, 13') configured to:

    receive intermediate data (7),
    modify a second prediction frame (9) by utilizing the received intermediate data (7), and
    generate output data (11) that includes the content of the modified second prediction frame (9), **characterized in that** the reproducer (13, 13') is configured to
    obtain from the received intermediate data (7) blocks identified as changed blocks (3),

receive a change indicator (8) indicating the positions of the blocks in the second prediction frame (9) that should be modified and that should not be modified, and
carry out said modifying by including the obtained changed blocks (3) in the second prediction frame (9) in the positions of the blocks that according to the change indicator (8) should be modified.

**11.** A reproducer (13, 13') according to claim 10, **characterized in that**
the reproducer is configured to receive an indication of the size of the different blocks of the second prediction frame (9) via the change indicator (8), and
to carry out said modifying of the prediction frame (9) by taking into account the indicated size of the different blocks.

**12.** A reproducer according to one of claims 10 to 11, **characterized in that** the reproducer is configured to receive a global change information indication for use as the second prediction frame when intermediate data is processed by the reproducer.

**13.** A method of processing received input data (10), comprising:

dividing an individual frame (1) included in the input data (10) into blocks,
comparing the blocks of the individual frame (1) with corresponding blocks of a first prediction frame (2) for detecting differences in the compared blocks,
identifying as changed blocks (3) the blocks of the individual frame for which differences have been detected,
identifying as unchanged blocks (4) the blocks of the individual frame for which no differences have been detected, and
generating intermediate data (7, 7'), **characterized in that** for each processed individual frame the method comprises:

including in the generated intermediate data (7, 7') the blocks identified as changed blocks (3), and
generating a change indicator (8) indicating the positions in the individual frame (1) of the identified changed blocks (3) and identified unchanged blocks (4).

**14.** A method of producing output data (11) comprising:

receiving intermediate data (7),
modifying a second prediction frame (9) by utilizing the received intermediate data (7), and
generating the output data (11) to include the content of the modified second prediction frame (9), **characterized in that** the method comprises:

obtaining from the received intermediate data (7) blocks identified as changed blocks (3),
receiving a change indicator (8) indicating the positions of the blocks of the second prediction frame (9) that should be modified and that should not be modified, and
carrying out said modifying by including the obtained changed blocks (3) in the second prediction frame (9) in the positions of the blocks that according to the change indicator (8) should be modified.

**15.** A computer program, **characterized in that** the computer program is configured to control a programmable computer to carry out a method according to claim 13 or 14.

**16.** A computer readable storage medium, **characterized in that** the computer readable storage medium is encoded with a computer program according claim 15.

**Amended claims in accordance with Rule 137(2) EPC.**

**1.** A processor (12, 12', 12") configured to:

receive input data (10),
divide an individual frame (1) included in the input data into blocks,
compare the blocks of the individual frame (1) with corresponding blocks of a first prediction frame for (2) detecting differences in the compared blocks,
identify as changed blocks (3) the blocks of the individual frame (1) for which differences have been detected,

identify as unchanged blocks (4) the blocks of the individual frame (1) for which no differences have been detected, and

generate intermediate data (7, 7', 7") that for each processed individual frame (1) includes the blocks identified as changed blocks (3),

**characterized in that** the processor is configured to generate a change indicator (8) indicating in the order that the individual frame (1) is processed for each block whether the block is a changed block (3) or an unchanged block (4).

2. The processor according to claim 1, further **characterized in that** for each processed individual frame (1) the processor is configured to drop the blocks identified as unchanged blocks (4) by not including them into the generated intermediate data (7, 7').

3. The processor according to claim 1, further **characterized in that** for each processed individual frame (1) the processor is configured to include in the generated intermediate data (7") also the blocks identified as unchanged blocks (4).

4. The processor according to one of claims 1 - 3, further **characterized in that** for each processed individual frame (1) the processor (12, 12', 12") is configured to modify the first prediction frame (2) such that when processing of a subsequent individual frame is carried out at least the blocks identified as changed blocks (3) in the previous processed individual frame (1) have been modified in the first prediction frame (2) to correspond to the corresponding blocks of the previously processed individual frame.

5. The processor according to one of claims 1 - 3, further **characterized in that** for each processed individual frame (1) the processor (12") is configured to modify the first prediction frame (2) by utilizing a signal indicating the content of the changed blocks (3) of the intermediate data (7") after an encoding and decoding operation.

6. The processor according to one of claims 1 to 5, further **c h a r a c t e r i z e d** in that the processor (12, 12', 12") is configured to
divide the individual frame (1) included in the input data (10) into blocks of different size, and
generate the change indicator (8) to additionally indicate the size of the blocks of the processed individual frame (1).

7. The processor according to one of claims 1 to 6, further **characterized in that** the processor is configured to compare the detected differences to a threshold, and to identify as changed blocks (3) the blocks of the individual frame (1) whose detected differences exceeds the threshold, and to identify as unchanged blocks (4) the blocks of the individual frame (1) whose detected differences do not exceed the threshold.

8. The processor according to one of claims 1 to 7, further **characterized in that** the processor is configured to forward to a reproducer a global change information indication for use as a second prediction frame when intermediate data is processed by the reproducer.

9. A reproducer (13, 13') configured to:

receive intermediate data (7),
obtain from the received intermediate data (7) blocks identified as changed blocks (3),
modify a second prediction frame (9) by utilizing the received intermediate data (7), and
generate output data (11) that includes the content of the modified second prediction frame (9), **characterized in that** the reproducer (13, 13') is configured to
receive a change indicator (8) indicating in the order that the second prediction frame (9) is processed for each block whether the block should be modified or should not be modified, and
carry out said modifying by including the obtained changed blocks (3) in the second prediction frame (9) in the positions of the blocks that according to the change indicator (8) should be modified.

10. A reproducer (13, 13') according to claim 9, further **characterized in that**
the reproducer is configured to receive an indication of the size of the different blocks of the second prediction frame (9) via the change indicator (8), and
to carry out said modifying of the prediction frame (9) by taking into account the indicated size of the different blocks.

11. A reproducer according to one of claims 9 to 10, further **characterized in that** the reproducer is configured to receive a global change information indication for use as the second prediction frame when intermediate data is processed by the reproducer.

12. A method of processing received input data (10), comprising:

dividing an individual frame (1) included in the input data (10) into blocks,
comparing the blocks of the individual frame (1) with corresponding blocks of a first prediction frame (2) for detecting differences in the compared blocks,
identifying as changed blocks (3) the blocks of the individual frame for which differences have been detected,
identifying as unchanged blocks (4) the blocks of the individual frame for which no differences have been detected, and
generating intermediate data (7, 7') that for each processed individual frame includes the blocks identified as changed blocks (3), **characterized in that** the method comprises:

generating a change indicator (8) indicating in the order that the individual frame (1) is processed for each block whether the block is a changed block (3) or an unchanged block (4).

13. A method of producing output data (11) comprising:

receiving intermediate data (7),
obtaining from the received intermediate data (7) blocks identified as changed blocks (3),
modifying a second prediction frame (9) by utilizing the received intermediate data (7), and
generating the output data (11) to include the content of the modified second prediction frame (9), **characterized in that** the method comprises:

receiving a change indicator (8) indicating in the order the second prediction frame (9) is processed for each block whether the block should be modified or should not be modified, and
carrying out said modifying by including the obtained changed blocks (3) in the second prediction frame (9) in the positions of the blocks that according to the change indicator (8) should be modified.

14. A computer program, **characterized in that** the computer program is configured to control a programmable computer to carry out a method according to claim 12 or 13.

15. A computer readable storage medium, **characterized in that** the computer readable storage medium is encoded with a computer program according claim 14.

FIG. 1

FIG. 2

FIG. 3

| 0 | 1 | 0 | 1 | 0 | 0 | 0 | 0 | 0 | 0 | 0 | 1 | 0 | 0 | 0 | 0 | 0 | 1 | 0 | 0 |

FIG. 4

FIG. 5

FIG. 6

FIG. 7

FIG. 8

FIG. 9

Europäisches
Patentamt

European
Patent Office

Office européen
des brevets

# EUROPEAN SEARCH REPORT

**Application Number**

EP 13 17 2237

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/219065 A1 (KAERKKAEINEN TUOMAS [FI] ET AL) 30 August 2012 (2012-08-30) | 1,3,4,6, 8-10, 12-16 | INV. H04N7/36 |
| A | * the whole document * | 2,5,7,11 | |
| X | US 4 717 957 A (SANTAMAEKI HARRY [FI] ET AL) 5 January 1988 (1988-01-05) | 1,2,5,6, 9,10, 12-16 | |
| A | * the whole document * | 3,4,7,8, 11 | |
| X | EP 0 518 464 A2 (TEKTRONIX INC [US] TEKTRONIX INC [DE]) 16 December 1992 (1992-12-16) | 1,6-16 | |
| A | * the whole document * | 2-5 | |

**TECHNICAL FIELDS SEARCHED (IPC)**

H04N

The present search report has been drawn up for all claims

| Place of search | Date of completion of the search | Examiner |
|---|---|---|
| Munich | 26 July 2013 | Ernst, Jens |

EPO FORM 1503 03.82 (P04C01)

**ANNEX TO THE EUROPEAN SEARCH REPORT
ON EUROPEAN PATENT APPLICATION NO.**                    EP 13 17 2237

This annex lists the patent family members relating to the patent documents cited in the above-mentioned European search report.
The members are as contained in the European Patent Office EDP file on
The European Patent Office is in no way liable for these particulars which are merely given for the purpose of information.

26-07-2013

| Patent document cited in search report | | Publication date | Patent family member(s) | | Publication date |
|---|---|---|---|---|---|
| US 2012219065 | A1 | 30-08-2012 | NONE | | |
| US 4717957 | A | 05-01-1988 | AU | 5192886 A | 22-07-1986 |
| | | | DE | 3582889 D1 | 20-06-1991 |
| | | | EP | 0245253 A1 | 19-11-1987 |
| | | | JP | S62501532 A | 18-06-1987 |
| | | | US | 4717957 A | 05-01-1988 |
| | | | WO | 8603922 A1 | 03-07-1986 |
| EP 0518464 | A2 | 16-12-1992 | EP | 0518464 A2 | 16-12-1992 |
| | | | JP | 2646169 B2 | 25-08-1997 |
| | | | JP | H05211646 A | 20-08-1993 |
| | | | US | 5228098 A | 13-07-1993 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006016007 A1